# EUROPÄISCHE PATENTANMELDUNG

(11) **EP 0 588 158 A1**
(43) Veröffentlichungstag der Anmeldung: **23.03.1994**
(21) Anmeldenummer: 93114028.9
(22) Anmeldetag: 02.09.1993
(51) Int. Cl.: C08G 73/14, C08G 73/10

(54) **Thermostabile Polyimide und Polyamidimide mit modifizierten Benzhydrolstrukturelementen und deren Herstellung**

(30) Priorität: 17.09.1992 AT 1850/92
(71) Anmelder: DSM Chemie Linz GmbH, 4021 Linz (AT)
(72) Erfinder: Greber, Gerhard, Dr., Verstorben (AT); Gruber, Heinrich, Dr., A-1190 Wien (AT); Sychra, Marcel, Dr., A-3500 Krems a.d. Donau (AT)
(74) Vertreter: Kunz, Ekkehard, Dr.

(57) **Zusammenfassung**

Thermostabile Polyimide und Polyamidimide der Formel I 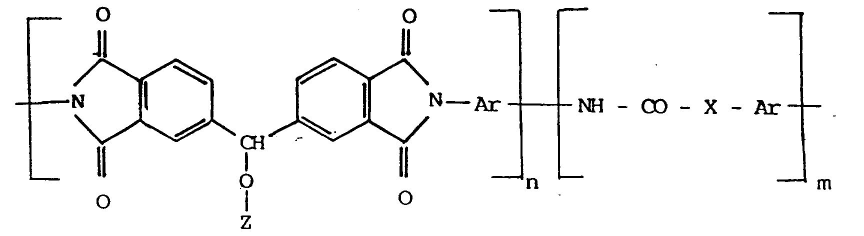
in der Ar einen divalenten aromatischen Rest der Formel 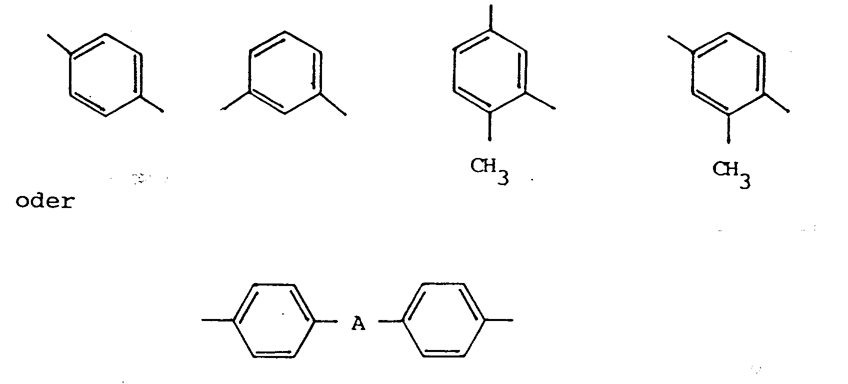
oder Gemische derselben, wobei A für -CH₂-, -C(CH₃)₂-, -O-, -S-, -SO₂-, -SO-, -CO-, COO-, -CO-NH-, -NH-, -(N-Alkyl) mit 1 bis 20 C-Atomen, -N=N- oder für 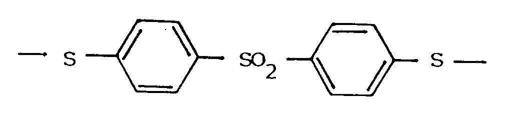
steht, X einen Rest der Formel 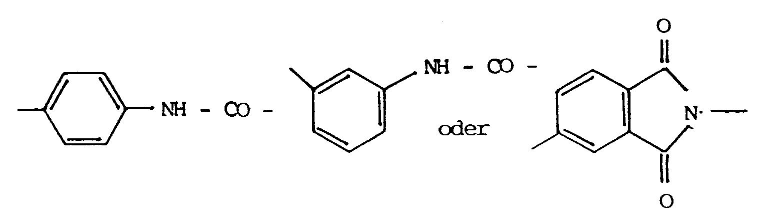
und Z gleich oder verschieden ist und Wasserstoff, einen geradkettigen oder verzweigten, gesättigten oder ein- oder mehrfach ungesättigten Acyl-Rest mit 2 bis 20 C-Atomen oder einen Aroyl- Rest mit 7 bis 20 C-Atomen, der gegebenenfalls durch Halogen substituiert sein kann, bedeutet, mit der Maßgabe, daß Z nicht Wasserstoff alleine ist und n eine ganze Zahl von 2 bis 100 und m eine ganze Zahl von 0 bis 100 bedeuten, wobei im Fall, daß m>1 der Rest (-NH-CO-X-Ar-) statistisch verteilt ist.

## Beschreibung

Die Erfindung betrifft thermostabile Polyimide und Polyamidimide mit modifizierten Benzhydrolstrukturelementen und deren Herstellung.

Die bis heute technisch wichtigsten thermostabilen Polymere sind vollaromatische Polyimide, die extreme Thermostabilitäten aufweisen, aber weder schmelzbar noch löslich und daher nur aufwendig und teuer zu verarbeiten sind. Die etwas weniger thermostabilen aromatischen Polyamide sind ebenfalls unschmelzbar und in den meisten organischen Lösungsmitteln unlöslich oder nur wenig löslich, sodaß ihre Verarbeitung aus Lösung zu Fasern oder Folien mit großen Schwierigkeiten verbunden ist. Die schwierige Verarbeitbarkeit verteuert diese thermostabilen Polymeren ganz erheblich und schließt sie daher aus einer Reihe von interessanten Anwendungen aus.
Versuche zur Entwicklung von schmelzbaren oder besser löslichen thermostabilen Polymeren, z.B. durch Einbau von flexiblen Kettenelementen (-CH₂-, -O-, -S-, -CO-) oder sterisch anspruchsvollen Gruppen waren zwar erfolgreich, führten bisher jedoch immer zu einer meist beträchtlichen Einbuße an Thermostabilität.
Hierher gehören auch die Polyamidimide und Polyesterimide, in denen aromatische Amid- und Imid- bzw. Ester- und Imidgruppen statistisch angeordnet sind, die meist löslich sind oder thermoplastische Eigenschaften besitzen, aber ebenfalls eine geringe Thermostabilität aufweisen (US-PS-3.895.064).

Die eigentliche Problemlösung auf dem Gebiet der thermostabilen Polymeren liegt also noch immer auf der Entwicklung von neuen Produkten mit hoher Thermostabilität und gleichzeitig guter Verarbeitbarkeit.

Aufgabe der vorliegenden Erfindung war es, neue Polyimide und Polyamidimide zu entwickeln, die bei extremer Thermostabilität in der cyclisierten Form löslich und/oder schmelzbar und somit nach herkömmlichen Methoden einfach verarbeitbar sind.

Es wurde nun gefunden, daß diese Aufgabe mit Hilfe von Polyimiden bzw. Polyamidimiden auf Basis von 3,3',4,4'-Benzhydroltetracarbonsäuredimethylester gelöst werden kann.

Gegenstand der Erfindung sind daher thermostabile Polyimide und Polyamidimide der Formel I 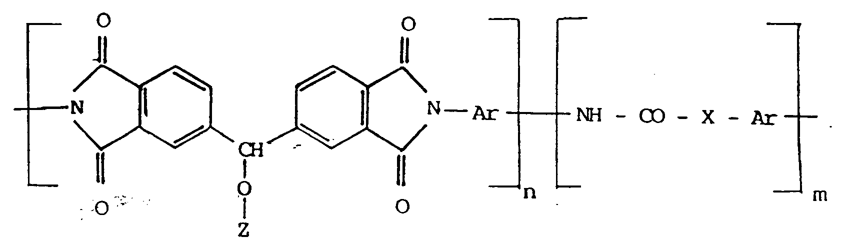
in der Ar einen divalenten aromatischen Rest der Formel 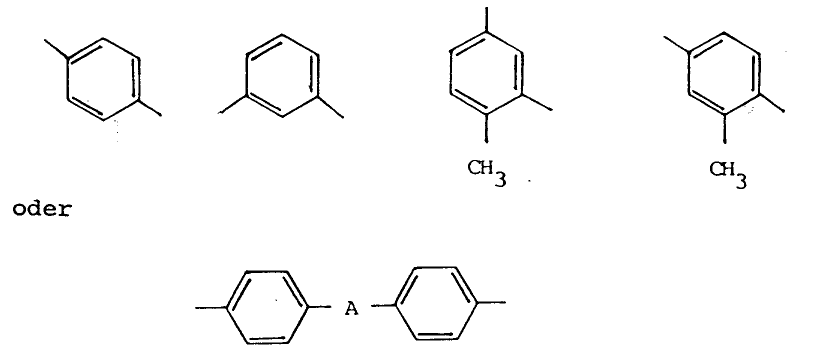
oder Gemische derselben, wobei A für -CH₂-, -C(CH₃)₂-, -O-, -S-, -SO₂-, -SO-, -CO-,-COO-, -CO-NH-, -NH-, -(N-Alkyl) mit 1 bis 20 C-Atomen, -N=N- oder für 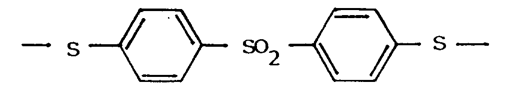
steht, X einen Rest der Formel 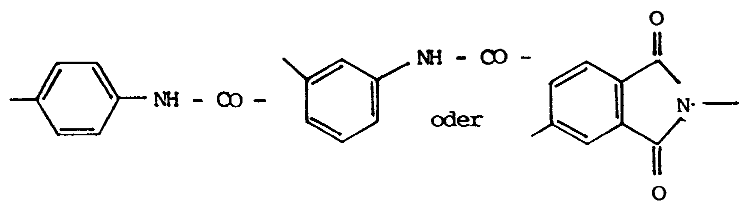
und Z gleich oder verschieden ist und Wasserstoff, einen geradkettigen oder verzweigten, gesättigten oder ein- oder mehrfach ungesättigten Acyl-Rest mit 2 bis 20 C-Atomen oder einen Aroyl-Rest mit 7 bis 20 C-Atomen, der gegebenenfalls durch Halogen substituiert sein kann, bedeuten, mit der Maßgabe, daß Z nicht Wasserstoff alleine ist und n eine ganze Zahl von 2 bis 100 und m eine ganze Zahl von 0 bis 100 bedeuten, wobei im Fall, daß m>1 der Rest (-NH-CO-X-Ar-) statistisch verteilt ist.

In der Formel I bedeutet Ar einen aromatischen Rest, wie zum Beispiel einen m- oder p-Phenylen-, 2,4-Tolylen-, 2,5-Tolylenrest oder einen Rest wie z.B. Diphenylenmethan, Diphenylenpropan, Diphenylenether, Diphenylensulfon, Diphenylensulfid, Diphenylenamin, Diphenylencarboxyd oder 1,4-Bis(phenylenthio)diphenylsulfon.

Z bedeutet Wasserstoff oder einen geradkettigen oder verzweigten, gesättigten oder ein- oder mehrfach ungesättigten Acylrest mit 2 bis 20 C-Atomen, wie zum Beispiel einen Acetyl-, Propionyl-, Butyryl-, Isobutyryl-, Valeryl-, Trimethylacetyl-, Capronyl-, Caprinoyl-, Lauroyl-, Palmitoyl-, Stearoyl-, Acryloyl-, Methacryloyl-, Crotonoyl-, Linoloyl-, Linolenoyl-, oder Oleoylrest.
Z kann auch für eine Aroylrest mit 7 bis 20 C-Atomen, der gegebenenfalls mit Halogen, wie Chlor oder Brom substituiert sein kann, stehen, wie z.B. für einen Benzoyl-, o-Chlorbenzoyl, p-Chlorbenzoyl, m-Chlorbenzoyl-, o-Brombenzoyl-, m-Brombenzoyl-, p-Brombenzoyl, oder Phenacetylrest.

Bevorzugt sind Verbindungen der Formel I in der Ar einen m- oder p-Phenylen-, 2,4-Tolylen- oder 2,5-Tolylenrest oder einen Rest wie Diphenylenmethan, Diphenylenpropan, Diphenylenether, Diphenylenamin oder 1,4-Bis-(phenylenthio)diphenylsulfon bedeuted oder Z für Wasserstoff oder einen geradkettigen oder verzweigten, gesättigten oder ein- oder mehrfach ungesättigten Acylrest mit 2 bis 18 C-Atomen, wie z.B. ein Acetyl-, Butyryl-, Isobutyryl-, Trimethylacetyl-, Lauroyl-, Palmitoyl-, Stearoyl-, Acryloyl-, Methacryloyl-, Crotonoyl-, Linoloyl- oder Linolenoylrest oder einen Aroylrest mit 7 bis 10 C-Atomen wie einen Benzoyl- oder Phenacetylrest steht.

Besonders bevorzugt sind Verbindungen der Formel I in der Ar einen p-Phenylen- oder 2,4-Tolylenrest oder einen Rest wie Diphenylenmethan, Diphenylenpropan oder 1,4-Bis(phenylenthio)diphenylsulfon bedeutet oder Z für eine Acetyl-, Lauroyl-, Acryloyl-, Methacryloyl-, Crotonoyl-, Linoloyl-, Linolenoyl-, Benzoyl- oder Phenacetylrest steht.

Ein weiterer Gegenstand der vorliegenden Erfindung ist ein Verfahren zur Herstellung von Verbindungen der Formel I, das dadurch gekennzeichnet ist, daß 3,3',4,4'-Benzhydroltetracarbonsäuredimethylester
a) im Falle, daß in der Formel I m = 0 ist, mit Diaminen der Formel II

   NH₂ - Ar - NH₂

   in der Ar wie oben definiert ist, in einem unter den Reaktionsbedingungen inerten Verdünnungsmittel umgesetzt wird und die intermediär entstehende Polyamidsäure chemisch oder thermisch cyclisiert wird oder
b) im Falle, daß in der Formel I m > 0 ist, mit Diaminen der Formel II, in der Ar wie oben definiert ist und mit Trimellitsäure, Phthalsäure oder Isophthalsäure oder deren Derivaten umgesetzt wird und die intermediär enstehende Polyamidamidsäure chemisch oder thermisch cyclisiert wird und anschließend die so erhaltenen Polyimide bzw. Polyamidimide der Formel III 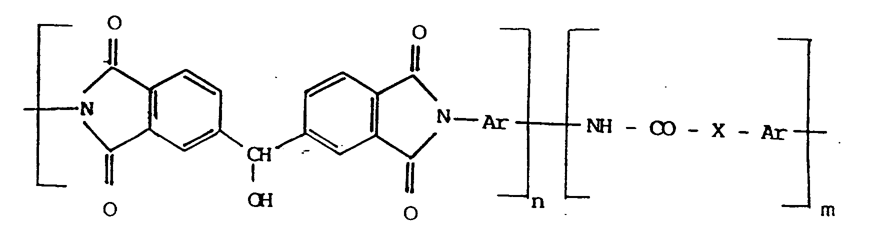 in der Ar, X, n und m wie oben definiert sind mit Säurechloriden oder Säureanhydriden der Formel

   Z' - Cl IVa

   oder

   Z' - O - Z' IVb

   in der Z' gleich oder verschieden ist und einen geradkettigen oder verzweigten, gesättigten oder ein- oder mehrfach ungesättigten Acylrest mit 2 bis 20 C-Atomen oder einen Aroylrest mit 7 bis 20 C-Atomen, der gegebenenfalls durch Halogen substituiert sind kann, bedeutet, in einem unter den Reaktionsbedingungen inerten Verdünnungsmittel zu den Verbindungen der Formel I umgesetzt werden.

Als Diamine der Formel II werden beispielsweise m- oder p-Phenylendiamin, 2,5- oder 2,4-Diaminotoluol, 4,4'-Diaminodiphenylmethan, 4,4'-Diaminodiphenylpropan, 4,4'-Diaminodiphenylether, 4,4'-Diaminodiphenylsulfid, 4,4'-Diaminodiphenylsulfon, 4,4'-Diaminodiphenylamin oder 4,4'-Bis(aminophenylthio)diphenylsulfon eingesetzt. Derivate der Trimellitsäure, Phthalsäure oder Isophthalsäure sind beispielsweise Anhydride, Anhydridchloride, Säurechloride oder Ester.

Bevorzugt werden bei der Herstellung der Polyimide der Formel III äquivalente Mengen an Benzhydroltetracarbonsäuredimethylester und Diamin eingesetzt. Bei der Herstellung der Polyamidimide der Formel III wird bevorzugt ein Molverhältnis von 1 : 1 : 2 (Benzhydroltetracarbonsäuredimethylester : Trimellitsäure bzw. Phthalsäure bzw. Isophthalsäure oder deren Derivate : Diamin) verwendet.

Die Umsetzung zu den Polyimiden und Polyamidimiden erfolgt vorzugsweise in an sich bekannter Weise in unter Reaktionsbedingungen inerten Verdünnungsmitteln, wie z.B. N-Methylpyrrolidon (NMP), Dimethylformamid (DMF), Dimethylacetamid (DMA), Dimethylsulfoxid (DMSO), Tetramethylharnstoff oder Hexamethylphosphorsäuretriamid (HMP).

Bevorzugt wird NMP und DMF, besonders bevorzugt NMP, als Verdünnungsmittel eingesetzt. Die Reaktion wird dabei unter Stickstoffatmosphäre durchgeführt. Die Reaktionstemperatur kann je nach verwendeten Ausgangsstoffen und gewünschtem Endprodukt zwischen 150 °C und 190 °C (?) liegen, die Reaktionszeit variiert zwischen 60 und 180 Minuten, vorzugsweise beträgt sie 100 bis 140 Minuten.

Die resultierenden Polyamidsäuren bzw. Polyamidamidsäuren werden dann durch 1 bis 5-stündiges, vorzugsweise 3- bis 4-stündiges Erhitzen in einem geeigneten Lösungsmittel bei 190 bis 220 °C unter heftigem Rühren und unter Wasserabspaltung zu den bekannten Polyimiden mit Benzhydrol-Strukturelementen cyclisiert.

Die anschließende Veresterung der OH-Gruppen der Polyimide bzw. Polyamidimide der Formel III mit Säurechloriden oder Säureanhydriden der Formel IVa oder IVb erfolgt dann gegebenenfalls in einem unter Reaktonsbedingungen inerten Verdünnungsmittel unter Stickstoffatmosphäre.

Vorzugsweise wird die Cyclisierung und nachfolgende Veresterung ohne Isolierung der Polyamidsäure in einer Eintopfreaktion durchgeführt.

Als Verdünnungsmittel eignen sich die oben angeführten Verdünnungsmittel, bevorzugt wird NMP eingesetzt. Im Falle der Veresterung mit polymerisierbaren Säurechloriden, wie Acryl- oder Methacrylsäurechlorid wird der Reaktionslösung eine Spatelspitze eines Inhibitors, wie Hydrochinon, zugesetzt um eine vorzeitige Polymerisation bzw. Vernetzung zu verhindern. Zweckmäßigerweise wird bei Verwendung der Säurechloride dem Reaktionsgemisch eine äquivalente Menge einer geeigneten Base, wie z.B. Trimethylamin, Triethylamin, Dimethylanilin oder Pyridin zugegeben, um die bei der Reaktion entstehende Salzsäure zu binden. Die Reaktionslösung aus Polyimid bzw. Polyamidimid, und Base wird auf eine Temperatur von etwa -10 °C bis 0 °C, vorzugsweise auf etwa -6 °C bis -4 °C abgekühlt und anschließend wird ein Säurechlorid, gelöst in einem unter den Reaktionsbedingungen inerten Verdünnungsmittel, während 20 bis 40 Minuten zugetropft. Das so erhaltene Reaktionsgemisch wird etwa 50 bis 80 Minuten weiter gekühlt und anschließend weitere 90 bis 150 Minuten bei Raumtemperatur gerührt. Die Menge an Säurechlorid bzw. Säureanhydrid hängt dabei von dem gewünschten Prozentsatz der OH-Gruppen-Veresterung ab und beträgt etwa 0,1 mol bis 1 mol Säurechlorid bzw. Säureanhydrid pro mol OH-Gruppe. Vorzugsweise wird jedoch ein Überschuß von 0,1 bis 6 mol pro mol OH-Gruppe eingesetzt.

Zur Isolierung der Polyimide bzw. Polyamidimide der Formel I wird das erhaltene Reaktionsgemisch, gegebenenfalls unter Zugabe einer Spatelspitze Hydrochinon, unter heftigem Rühren in Eiswasser eingetropft, das ausgefallene Produkt abfiltriert und mit Wasser, Methanol und Aceton gewaschen und beispielsweise durch Gefiertrocknung getrocknet.

Die so hergestellten Polyimide und Polyamidimide zeichnen sich je nach Art der Reste Z durch besondere Eigenschaften, wie z.B. durch eine gute Löslichkeit in unpolaren organischen Lösungsmitteln und somit leichtere Verarbeitbarkeit zu Fasern oder Folien oder durch niedrige Glastemperaturen, die ebenfalls die Verarbeitbarkeit vereinfachen, aus, oder sie weisen eine verbesserte Thermostabilität auf, oder sie lassen sich durch Licht oder Wärme leichter vernetzen.

### Beispiel 1

### Herstellung eines Polyimides (Ia) auf Basis von 3,3',4,4'-Benzhydroltetracarbonsäuredimethylester

In einem 250 ml Dreihalskolben mit mechanischem Rührer, Stickstoffeinleitung und kurzer Destillationsbrücke mit Thermometer, Mensur und Trockenrohr wurden 18,1 g (46,5 mmol) 3,3',4,4'-Benzhydroltetracarbonsäuredimethylester und 9,2 g (46,5 mmol) Bis(4-aminophenyl)methan in 30 ml NMP vorgelegt und unter Stickstoff und heftigem Rühren 2 Stunden auf 170 bis 180 °C und anschließend 4 Stunden auf 195 bis 200 °C erhitzt.
Die so erhaltende, sehr viskose Polyimidlösung wurde mit NMP auf etwa 15 bis 20 Gew.% verdünnt und anschließend zur weiteren Umsetzung verwendet.

Zur Ausbeutebestimmung wurde die Lösung mit Wasser gewaschen und bei 130 °C und 0,5 Torr (mmHg) über Nacht getrocknet.
Ausbeute: 24,5 g (98 % der Theorie)
inhärente Viskosität: 0,87 dl/g (bei 25 °C und einer Konzentration von 0,5 % in NMP)
Glastemperatur: 263 °C und 306 °C (DSC)
Thermostabilität: 472 °C (TGA, 5 % Gew. Verlust in Luft)

### Beispiel 2

### Herstellung eines Polyimides (IIa)

Die Herstellung erfolgt analog Beispiel 1.
Es wurden 7,8 9(20 mmol) 3,3',4, 4'-Benzhydroltetracarbonsäuredimethylester und 9,3 g (20 mmol) 1,4-Bis(4-aminophenylthio)diphenylsulfon eingesetzt.
Ausbeute: 15,5 g (96,5 % der Theorie)
inhärente Viskosität: 0,52 dl/g (bei 25 °C, Konzentration von 0,5 % in NMP)
Glastemperatur: 243 °C (DCS)
Thermostabilität: 465 °C (TGA, 5 % Gew. Verlust in Luft)

### Beispiel 3

### Herstellung eines Polyamidimides (Ib)

Die Herstellung erfolgte analog Beispiel 1.
Es wurden 9,0 g (23 mmol) 3,3',4,4'-Benzhydroltetracarbonsäuredimethylester, 4,5 g (23 mmol) Trimellitsäureanhydridchlorid und 9,1 g (46 mmol) Bis(4-aminophenyl)methan eingesetzt.
Ausbeute: 19,9 g (98,3 % der Theorie)
inhärente Viskosität: 0, 82 dl/g (bei 25 °C und einer Konzentration von 0,5 % in NMP)
Glastemperatur: 226 °C (DSC)
Thermostabilität: 438 °C (TGA, 5 % Gew.Verlust in Luft)

### Beispiel 4

### Herstellung eines Polyamidimides (IIb)

Die Herstellung erfolgte analog Beispiel 1.
Es wurden 9,0 g (23 mmol) 3,3',4,4'-Benzhydroltetracarbonsäuredimethylester, 3,9 g (23 mmol) Isophthalsäuredichlorid und 9,1 g (46 mmol) Bis(4-aminophenyl)methan eingesetzt.
Ausbeute: 19,2 g (97,8 % der Theorie)
inhärente Viskosität: 0,95 dl/g (bei 25 °C und einer Konzentration von 0,5 % in NMP)
Glastemperatur: 217 °C (DSC)
Thermostabilität:435 °C (TGA, 5 % Gew. Verlust in Luft)

### Beispiel 5

### Veresterung des Polyimides Ia mit Acrylsäurechlorid

In einem 100 ml Dreihalskolben mit mechanischem Rührer, Stickstoffeinleitung, Tropftrichter und Trockenrohr wurden 2 g Polyimid Ia (entspricht etwa 4 mmol OH-Gruppen), 4 mmol Pyridin und eine Spatelspitze Hydrochinon in 35 ml NMP unter Stickstoff gelöst, mit NaCl/Eis auf etwa -5 °C gekühlt und 0,36 g (4 mmol) Acrylsäurechlorid in 10 ml NMP in 30 Minuten zugetropft.
Nach etwa 1 Stunde wurde die Kühlung entfernt und das Reaktionsgemisch weitere 2 Stunden bei Raumtemperatur gerührt. Anschließend wurde das Reaktionsgemisch unter heftigem Rühren mit einer Spatelspitze Hydrochinon in 500 ml Eiswasser eingetropft, das ausgefallene Produkt abfiltriert und mit Wasser, Methanol und Aceton gewaschen und gefriergetrocknet.
Ausbeute: 2,2 g
inhärente Viskosität: 0,9 dl/g (0,5 %in NMP, 25 °C)
Glastemperatur: 314 °C
Thermostabilität: 513 °C
Analog zu Beispiel 5 wurden weitere Veresterungen durchgeführt. Die eingesetzten Mengen und Produkte, Ausbeute, Glastemperaturen (Tg), inhärenten Viskositäten (i.v.), Thermostabilitäten (TGA) sind in Tabelle 1 zusammengefaßt.

**Tabelle 1**

| **Polymer/Säurechlorid** | **Ausbeute (g)** | **i.V. (dl/g)** | **Tg (°C)** | **TGA (°C)** |
|---|---|---|---|---|
| Ia/Methacrylsäurechlorid (3 g/0,64 g) | 3,5 | 1,00 | 310 | 515 |
| Ia/Acetylchlorid (5 g/1,18 g) | 6,4 | 0,98 | 253 | 487 |
| Ia/Benzoylchlorid (2 g/0,7 g) | 2,5 | 0,61 | 280 | 477 |
| Ia/Acrylsäurechlorid (4 g/0,36 g) | 4,3 | 0,99 | 302 | 498 |
| Ia/Acetylchlorid (5 g/0,6 g) | 5,5 | 0,97 | 260 | 480 |
| IIa/Zimtsäurechlorid (3,76 g/1,3g) | 4,7 | 0,51 | 249 | 465 |
| IIa/Laurinsäurechlorid (7,52 g/3,28 g) | 10,3 | 0,53 | 226 | 453 |
| IIa/Crotonsäurechlorid (6,0 g/1,05 g) | 6,8 | 0,50 | 240 | 475 |
| IIa/Linolsäurechlorid (3,76 g/2,24 g) | 5,9 | 0,61 | 218 | 415 |
| Ib/Acetylchlorid (8,4 g/1,18 g) | 9,2 | 0,75 | 233 | 445 |
| IIb/Acetylchlorid (8,14 g/1,18 g) | 8,5 | 0,90 | 228 | 451 |

## Patentansprüche

1. Thermostabile Polyimide und Polyamidimide der Formel I 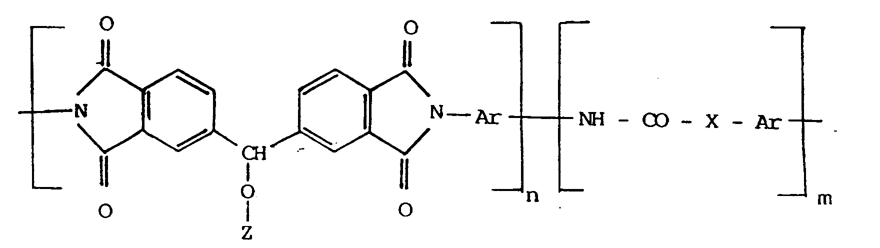 in der Ar einen divalenten aromatischen Rest der Formel 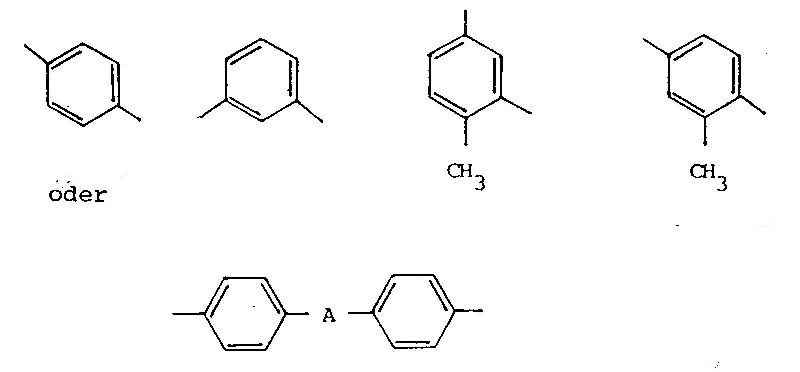 oder Gemische derselben, wobei A für -CH₂-, -C(CH₃)₂-, -O-, -S-, -SO₂-, -SO-, -CO-,-COO-, -CO-NH-, -NH-, -(N-Alkyl) mit 1 bis 20 C-Atomen, -N=N- oder für 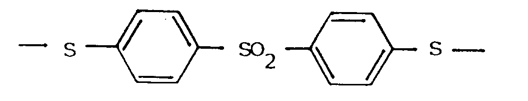 steht, X einen Rest der Formel 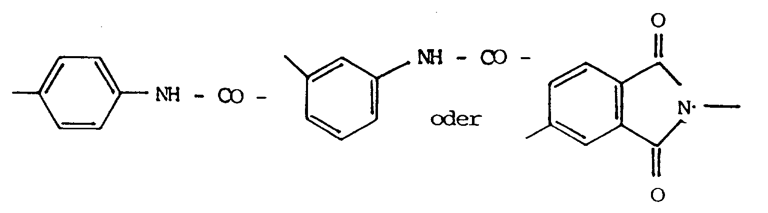 und Z gleich oder verschieden ist und Wasserstoff, einen geradkettigen oder verzweigten, gesättigten oder ein- oder mehrfach ungesättigten Acyl-Rest mit 2 bis 20 C-Atomen oder einen Aroyl- Rest mit 7 bis 20 C-Atomen, der gegebenenfalls durch Halogen substituiert sein kann, bedeutet, mit der Maßgabe, daß Z nicht Wasserstoff alleine ist und n eine ganze Zahl von 2 bis 100 und m eine ganze Zahl von 0 bis 100 bedeuten, wobei im Fall, daß m>1 der Rest (-NH-CO-X-Ar-) statistisch verteilt ist.

2. Thermostabile Polyimide und Polyamidimide der Formel I in der Ar einen divalenten aromatischen Rest der Formel 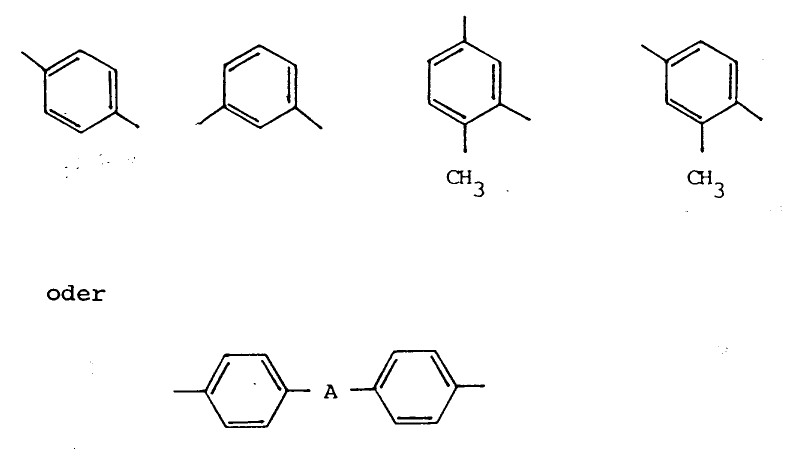 oder Gemische derselben bedeutet, wobei A für -CH₂-, -C(CH₃)₂-, -O-, -S-, -SO₂-, -NH- oder für 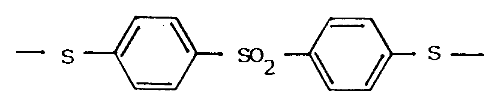 steht und X, Z, n und m wie in Anspruch 1 definiert sind.

3. Thermostabile Polyimide und Polyamidimide der Formel I, in der Z gleich oder verschieden ist und Wasserstoff, einen geradkettigen oder verzweigten, gesättigen oder ein- oder mehrfach ungesättigten Acylrest mit 2 bis 18 C-Atomen oder einen Aroylrest mit 7 bis 10 C-Atomen bedeutet, mit der Maßgabe, daß Z nicht Wasserstoff alleine ist und Ar, X, m und n wie in Anspruch 1 definiert sind.

4. Thermostabile Polyimide und Polyamidimide der Formel I, in der Ar einen divalenten aromatischen Rest der Formel 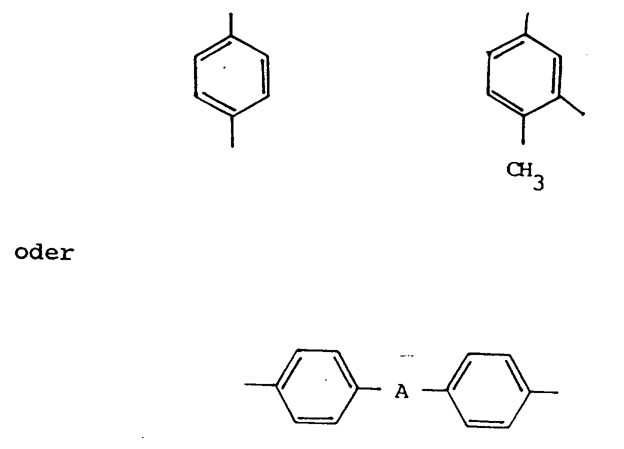 oder Gemische derselben bedeutet, wobei A für -CH₂-, -C(CH₃)₂- oder für 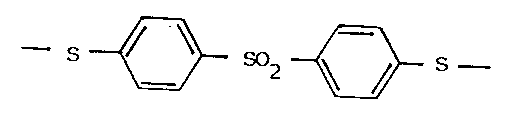 steht und X, Z, m und n wie in Anspruch 1 definiert sind.

5. Thermostabile Polyimide und Polyamidimide der Formel I in der Z einen Acetyl-, Lauroyl-, Crotonoyl-, Linoloyl-, Linolenoyl-, Benzoyl-, Phenylacetyl-, Acryloyl-, oder Methacryloylrest bedeutet und Ar, X, m und n wie in Anspruch 1 definiert sind.

6. Verfahren zur Herstellung von thermostabilen Polyimiden und Polyamidimiden der Formel I, in der Ar, Z, n und m wie in Anspruch 1 definiert sind, dadurch gekennzeichnet, daß 3,3'-4,4'-Benzhydroltetracarbonsäuredimethylester
a) im Falle, daß in der Formel I m = O ist, mit Diaminen der Formel II
NH₂ - Ar - NH₂
in der Ar wie in Anspruch 1 definiert ist, in einem unter den Reaktionsbedingungen inerten Verdünnungsmittel umgesetzt und die intermediär entstehende Polyamidsäure chemisch oder thermisch cyclisiert wird oder
b) im Fall, daß in der Formel I m > 0 ist, mit Diaminen der Formel II
NH₂ - Ar - NH₂
in der Ar wie in Anspruch 1 definiert ist, und mit Trimellitsäure, Phthalsäure oder Isophthalsäure oder deren Derivaten umgesetzt wird und die intermediär entstehende Polyamidamidsäure chemisch oder thermisch cyclisiert wird und anschließend die so erhaltenen Polyimide bzw. Polyamidimide der Formel III 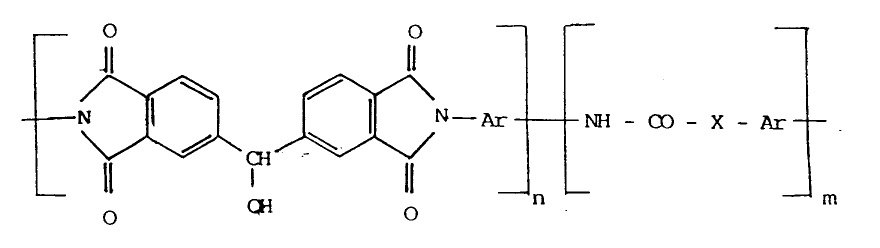 in der Ar, X, n und m wie in Anspruch 1 definiert sind mit Säurechloriden oder Säureanhydriden der Formel
Z' - Cl IVa
oder
Z' - O - Z' IVb
in der Z' gleich oder verschieden ist und eine geradkettigen oder verzweigten, gesättigten oder ein- oder mehrfach ungesättigen Acylrest mit 2 bis 20 C-Atomen oder einen Aroylrest mit 7 bis 20 C-Atomen, der gegebenenfalls durch Halogen substituiert sein kann, bedeutet, in einem unter den Reaktionsbedingungen inerten Verdünnungsmittel zu den Verbindungen der Formel I umgesetzt werden.
